# EUROPEAN PATENT APPLICATION

(11) **EP 4 764 881 A1**
(43) Date of publication of application: **24.06.2026**
(21) Application number: 24223023.3
(22) Date of filing: 23.12.2024
(51) Int. Cl.: G06F 16/21

(54) **COMPUTER-IMPLEMENTED METHOD FOR THE DYNAMIC MANAGEMENT OF DATABASES IN A CONTAINER ORCHESTRATION ENVIRONMENT**

(71) Applicant: inspirNation Bt., 2161 Csomád (HU)
(72) Inventor: Kovács, Richárd, 6000 Kecskemét (HU)
(74) Representative: RGTH

(57) **Abstract**

The invention provides a computer-implemented method (100) for the dynamic management of databases in a container orchestration environment (10), the container orchestration environment (10) comprising a container orchestration system (11) operated on a cluster with a leader node for handling a control plane and worker nodes for container deployment, the container orchestration environment (10) further comprising a key-value-store (12), a database controller (13) and a database management controller (14), the database management controller (14) comprising a control module (15) and a middleware module (16), the method comprising the steps:
- Identifying (31), by the control module (15) of the database management controller (14), a resource type, retrieving (32) a database policy, creating (34) a database configuration based on the resource type and the database policy, sending (35) the database configuration to the container orchestration system (11),
- Storing, by the container orchestration system (11), the database configuration in the key-value store (12),
- Creating (37), by the database controller (13), a database instance (38) based on the database configuration for the resource type if a database instance compliant with the database configuration for the resource type does not exist,
- Updating (33, 41), by the control module (15) of the database management controller (14), a database routing configuration for the resource type,
- Loading, by the middleware module (16) of the database management controller (14), the database routing configuration for the resource type.

## Description

The present invention relates to a computer-implemented method for the dynamic management of a databases in a container orchestration environment, the container orchestration environment comprising a container orchestration system operated on a cluster with a leader note for handling a control plane and worker nodes for container deployment.

Furthermore, the present invention relates to a computer program product, a computer readable storage medium and a data processing system.

### Technological background

Container orchestration environments allow for the automatic deployment, scaling and management of container applications without the user having to worry about the underlying infrastructures.

In a container orchestration environment the user defines the desired output instead of describing the steps required to arrive at the output. Developers write configuration files that define where container images are located, how the network between containers is set up and protected, and how container storage and resources are provided.

Container orchestration environments use configuration files to automatically reach the desired end state. When a new container is deployed the system automatically schedules the containers and searches for the appropriate host or worker node based on the constraints or requirements specified in the configuration file, such as CPU, memory, proximity to other hosts or even meta data.

Once the containers are running, container orchestration environments automate the life cycle management and operational tasks based on the container definition file, including the provisioning and deployment, the scaling of containers, load balancing, allocation of resources between containers, moving containers to other hosts to ensure availability in the event of resource shortages or unexpected failures, application performance and health monitoring, and service discovery.

A container orchestration environment comprises a software container orchestration system operated on a cluster of computers. The container orchestration system manages the interaction of the computers of the cluster. The cluster comprises a leader node for handling a control plane that takes care of administrative tasks in the cluster and offers an API for configuration, manages all specific configurations in a key-value-store and automatically applies these configurations to all applications on the cluster itself. The worker nodes are used to process the actual workload of the application.

An example of a container orchestration system is Kubernetes. Kubernetes uses ETCD for a key-value-stores. ETCD is optimized for fast reading and writing of small configuration data, but can become a bottle neck when used to store more complex data such as actual resource data. This limitation restricts the ability of container orchestration environments to store large amounts of application data.

### Disclosure of the invention: problem, solution, advantages

It is an object of the present invention to provide a computer-implemented method which allows the dynamic management of databases in a container orchestration environment.

To solve the object the present invention provides a computer-implemented method for the dynamic management of databases in a container orchestration environment, the container orchestration environment comprising a container orchestration system operated on a cluster with a leader node for handling a control plane and worker nodes for container deployment, the container orchestration environment further comprising a key-value-store, a database controller and a database management controller, the database management controller comprising a control module and a middleware module, the method comprising the steps:
- Identifying, by the control module of the database management controller, a resource type, retrieving a database policy, creating a database configuration based on the resource type and the database policy, sending the database configuration to the container orchestration system,
- Storing, by the container orchestration system, the database configuration in the key-value-store,
- Creating, by the database controller, a database instance based on the database configuration for the resource type if a database instance compliant with the database configuration for the resource type does not exist,
- Updating, by the control module of the database management controller, a database routing configuration for the resource type,
- Loading, by the middleware module of the database management controller, the database routing configuration for the resource type.

The control moule of the database management controller may update the database routing configuration for the resource type with the created database instance or with an existing database instance. If the database routing configuration for the resource type is updated with an existing database instance, the existing database instance may be reused for the resource type.

The database controller can be a third party database controller, i.e. a database controller that is not built-in in the container orchestration system.

The key-value-store can be ETCD, however any other key-value-store may be used.

The container orchestration environment comprises a cluster of computers or hosts with a leader node and worker nodes. The container orchestration system is a software installation operated on the cluster, where one of the hosts, the leader node, handles a control plane, and further hosts, i.e. the worker nodes, are used for container deployment. The container orchestration environment comprises a key-value-store, such as ETCD.

Further according to the invention, the container orchestration environment comprises a database controller for the handling of, preferably external, databases, and at least one database management controller responsible for automating the creation and management of databases. The database management controller comprises a control module and a middleware module.

Resource types are data structure definitions for any data structure relevant to user applications or infrastructure, as well as database policies. The database polices provide definitions for data locations for storing instances of resource types.

According to the invention the control module of the database management controller identifies a resource type and retrieves a database policy for the resource type. The control module of the database management controller then creates a database configuration for the resource type based on the database policy and sends the database configuration to the container orchestration system. The container orchestration system, upon receipt of the database configuration, stores the database configuration in the key-value-store and the database controller creates a database instance compliant with the database configuration for the resource type, if such a database instance does not exist or reuses an existing database instance based on the database policy. The control module of the database management controller then updates a database routing configuration for the resource type. If a new database instance has been created by the database controller the database routing configuration for the resource type is updated with regard to the new database instance. If an existing database instance compliant with the database configuration for the resource type has been detected, the control module of the database management controller updates the database routing configuration for the resource type with regard to the existing database instance.

Preferably, the control module of the database management controller does not change any database configuration of the container orchestration system. The database management controller, in particular the control module, further preferably provides a single-entry point for a distributed database system.

Advantageously the database management controller of the container orchestration environment separates configuration related tasks from the handling of more complex data. Configuration data such as database policies, database configurations and resource types are stored in the key-value-store, which is optimized for fast access to such lightweight data. More complex data such as application data, resource type instances etc., are stored in other database instances controlled by the database controller. These other databases can be any relational or non-relational databases such as MySQL, pgSQL etc., which are better suited for handling complex data such as application data, resource type instances, etc., than the key-value-store of the container orchestration environment.

In the step of Identifying a resource type by the control module of the database management controller, a mechanism within the container orchestration system may first detect a resource type and notify the control module of the data management controller of the detected resource type. The control module of the database management controller then identifies the resource type and retrieves the database policy to create the database configuration.

In the step of creating a database instance the container orchestration system may notify the database controller of the creation of the database configuration, upon which the database controller creates a database instance, preferably if no database instance compliant with the database configuration exists.

The method may cover three cases:
- No database policy for the resource type exists: In this case the default database, for example the key-value-store, of the container orchestration system is used and a database configuration is created based on the resource type and the default database.

- A database policy and database instance compliant with the database configuration for the resource type exist: In this case instances of the resource type are stored in the existing database. Data routing is preferably conducted by the database management controller or the user.
- A database policy exists but no database instance compliant with the database configuration for the resource type exists: In this case a new database instance is created.

The control module may be responsible for the step of creating a database configuration and for the step of updating a database configuration. The middleware module may be responsible for all further steps performed by the database management controller described in this application. The middleware module may be responsible for finding data locality and for routing database requests to the desired database instance. The middleware module may be a shim that translates a key-value-store API to an API of other databases. The middleware may be the ETCDshim "Kine".

Preferably the database management controller is a software package installed by the user or an container orchestration system operator. It may be required that the container orchestration system is at least in parts recompiled for the installation of the database management controller.

Preferably, the resource type is a user defined resource type, wherein the user defined resource type is further preferably created by the steps:
- Sending a request, by a user, to the container orchestration system for the creation of a user defined resource type,
- Creating, by the container orchestration system, the user defined resource type and sending the user defined resource type to the middleware module of the database management controller,
- Identifying, by the middleware module of the database management controller, a data location for the user defined resource type and storing the user defined resource type in the key-value-store.

User defined resource types are extensions to the container orchestration system API that allow users to define and manage their own object types beyond the built-in resource types of the container orchestration system. They allow users to create custom object types that behave similarly to native container orchestration system objects and extend the functionality of the container orchestration environment.

The step of creating the user defined resource type is preferably conducted before the step of identifying, by the control module of the database management controller, a resource type. Thus, after updating the database routing configuration for the user defined resource type, the database management controller, in particular the middleware module, is capable to dynamically manage routes for the user defined resource types within the container orchestration environment. A user can focus exclusively on defining the data structures via the user defined resource types and implementing the application logic, while the container orchestration environment comprising the database management controller takes care of all infrastructure aspects such as database provisioning, data routing and configuration management. In other words, the user no longer has to worry about setting up, scaling or routing the underlying infrastructure. They can develop and iterate the applications faster and focus exclusively on the application logic.

Preferably the method may further comprise the steps
- Sending a request, by the user, to the container orchestration system for the creation of a user defined resource type instance,
- Sending the request, by the container orchestration system, to the middleware module of the database management controller,
- Identifying, by the middleware module of the database management controller, a database instance for the user defined resource type instance by evaluating the database configuration for the user defined resource type,
- Storing, by the middleware module of the database management controller, the user defined resource type instance in the identified database instance.

Thus, preferably after the database routing configuration has been updated for the user defined resource type, the user may initiate the creation of a user defined resource type instance. The database management controller, in particular the middleware module, then takes care of routing the user defined resource type instance to the appropriate database instance based on the database routing configuration. When the user defined resource type instance has been stored in the database instance the container orchestration system notifies the user that the user defined resource type instance has been created and stored.

Furthermore preferably, the database policy is a user defined database policy, wherein the user defined database policy is further preferably created by the steps:
- Sending a request, by a user, to the container orchestration system for the creation of a user defined database policy,
- Creating, by the container orchestration system, the user defined database policy and sending the user defined database policy to the middleware module of the database management controller,
- Identifying, by the middleware module of the database management controller, a data location for the user defined database policy and storing the user defined database policy in the key-value-store.

A user defined database policy is a special case of a user defined resource type. Accordingly, the steps for creating the user defined database policy are similar to the steps for creating the user defined resource type. The user defined database policy is preferably created before the step of identifying, by the database management controller, a resource type.

Preferably, a user first creates a user defined database policy for a resource type and the user defined resource type via the steps described above. The database management controller, in particular the control module, creates a database configuration for the user defined resource type based on the user defined database policy and the database controller creates a database instance according to the database configuration. The database management controller, in particular the control module, furthermore updates the database routing configuration. The user may then request the creation of user defined resource type instances. The database management controller, in particular the middleware module, takes care of routing the user defined resource type instance to the appropriate database instance based on the database routing configuration.

Advantageously, the computer-implemented method provides a great flexibility for data placement and routing. The database management controller ensures that different types of data are forwarded to the appropriate storage system thereby reducing the load on the key-value-store and preventing it from becoming a bottle neck. The workload is distributed across different systems. This ensures that each database is used for its intended purpose and can be scaled independently. As resource storage growth the database instances can be scaled without impacting the performance of the key-value-store. Distributing data across multiple databases has a huge performance advantage over a single database.

Furthermore, preferably the user defined database policy defines the data location for user defined resource type instances based on various user defined options and/or based on at least one of the user defined resource type, namespaces, applications, object labels, database type, database topology, scalability requirements or security compliance.

The database management controller is able to store each data set in a specific namespace in separate database instances. Furthermore, the database management controller may use labels for objects and perform a logical grouping based on the labels and store the grouped data in separate databases.

Furthermore preferably, the user defined resource type is a data structure requiring database handling.

In a preferred embodiment the method comprises at least one of the steps:
- Preferably dynamically, scaling, by a monitoring module of the database management controller, the database instance,
- Transferring, by a migration module of the database management controller, data between database instances, preferably based on user-defined rules,
- Upgrading, by an upgrade module of the database management controller, database instances, preferably based on user-defined rules.

It may also be preferred that the container orchestration environment, in particular the database management controller, offers to fully manage services for the creation of database backups.

Preferably, the database management controller, further preferably the middleware module, comprises a global revision mapping module, the method further comprising the step
- Mapping, by the global revision mapping module, database instances into a global revision system, and/or
- Increasing, by the global revision mapping module, a global unique revision counter for each write operation.

The global revision mapping module allows different databases to work with different versions, whereby the revision mapping module consolidates database specific revisions into a global revision system and, thus, maintains consistency data management, and preferably implements contracts with the container orchestration system.

Still further, the container orchestration system is a Kubernetes installation, preferably to deploy and manage Kubernetes like API servers, and/or the key-value-store is an ETCD installation, and/or the database is a relational database, in particular a MySQL database or a pgSQL database, or a non-relational database.

It is furthermore preferred, that the method may be conducted, preferably by a user, separately of a main Kubernetes API.

The database may have a flat topology or a hierarchical topology.

In a flat topology, each database configuration represents a single database. For example, x.y resource type instances are stored in database A and x.x resource type instance are stored in database B. In a hierarchical topology x.y resource types instances should be stored in separated database instances based on other expressions, for example resource types instances starting with the letter A are stored in database A, and resource type instances starting with the letter B are stored in database B.

The user may choose if they prefer a flat topology or a more complex hierarchical topology. Structuring data in hierarchical topologies provides numerous options for scaling the data level. Each leaf in the structure can use a different database instance, allowing for special performance optimization and customized configuration based on specific data requirements. This approach not only improves scalability, but also ensures that applications can leverage the strength of different database technologies, improving overall efficiency and responsiveness of the container orchestration environment.

The invention further provides a computer program product comprising instructions which, when the program is executed by a cluster comprising a leader node and worker nodes, cause the cluster to carry out the steps of the method described above.

A still further solution is provided with a computer-readable storage medium comprising instructions which, when executed by a cluster comprising a leader node and worker nodes, cause the cluster to carry out the steps of the method described above.

Furthermore, the invention provides a data processing system comprising means for carrying out the steps of the method described above.

Preferably, the data processing system comprises a cluster with a leader node for handling a control plane and worker nodes for container deployment.

### Brief description of the figures

A computer-implemented method for the dynamic management of databases in a container orchestration environment is described in more detail with reference to the figu res.
- Fig. 1: shows a sequence diagram for the creation of a user defined database policy,
- Fig. 2: shows a sequence diagram for the creation of a user defined resource type,
- Fig. 3: shows a sequence diagram for the creation of a database configuration and a database routing configuration for the user defined resource type, and
- Fig. 4: shows a sequence diagram for the storing of a user defined resource type instance.

### Detailed description of the figures

The figures shows sequence diagrams for a computer implemented method 100 for the dynamic management of databases in a container orchestration environment 10. The container orchestration environment 10 comprises a container orchestration system 11 operated on a cluster (not shown) with a leader node for handling a control plane and worker nodes for container deployment. The container orchestration environment 10 further comprises a key-value-store 12, a database controller 13 and a database management controller 14. The database management controller 14 comprises a control module 15 and a middleware module 16. A user 17 may interact with the container orchestration environment 10.

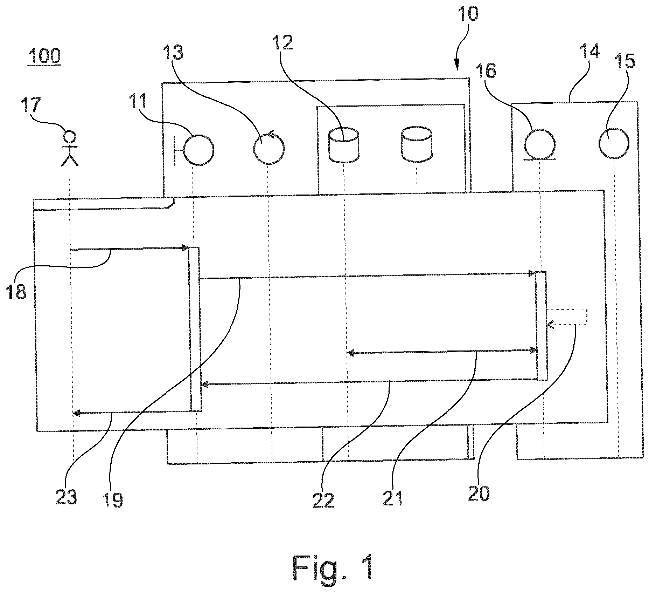

Fig. 1 shows a sequence diagram for the creation of a user defined database policy. In a first step the user 17 sends 18 a request for the creation of a user defined database policy to the container orchestration system 11. The container orchestration system 11 creates the user defined database policy and sends 19 the user defined database policy to the database management controller 14, in particular to the middleware module 16 of the database management controller 14. The middleware module 16 of the database management controller 14 identifies 20 a data location for the user defined database policy, in particular in the key-value-store 12, and stores 21 the user defined database policy in the key-value-store 12. When the user defined database policy has been stored in the key-value-store 12 the middleware module 16 of the database management controller 14 notifies 22 the container orchestration system 11 accordingly, which in turn notifies 23 the user 17 about the creation of the user defined database policy.

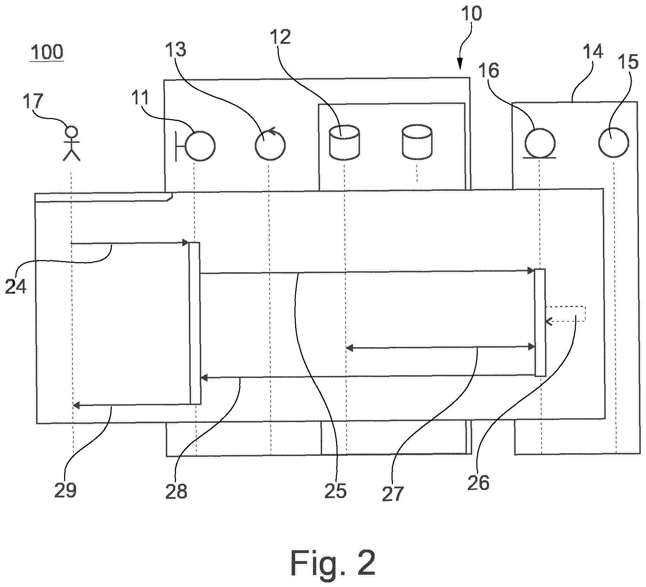

Fig. 2 shows a sequence diagram for the creation of a user defined resource type. The steps for the creation of the user defined resource type are similar to the steps for the creation of a user defined database policy. User defined resource types are extensions to the container orchestration system 11 API that allow users 17 to define and manage their own object types beyond the built-in resource types of the container orchestration system 11. They allow users 17 to create custom object types that behave similarly to native container orchestration system 11 objects and extend the functionality of the container orchestration environment 10. The user 17 sends 24 a request for the creation of a user defined resource type to the container orchestration system 11. The container orchestration system 11 creates the user defined resource type and sends 25 the user defined resource type to the database management controller 14, in particular to the middleware module 16 of the database management controller 14. The middleware module 16 identifies 26 a data location for the user defined resource type, in particular in the key-value-store 12, and stores 27 the user defined resource type in the key-value-store 12. When the user defined resource type has been stored in the key-value-store 12 the middleware module 16 of the database management controller 14 notifies 28 the container orchestration system 11 accordingly, which in turn notifies 29 the user 17 about the creation of the new user defined resource type.

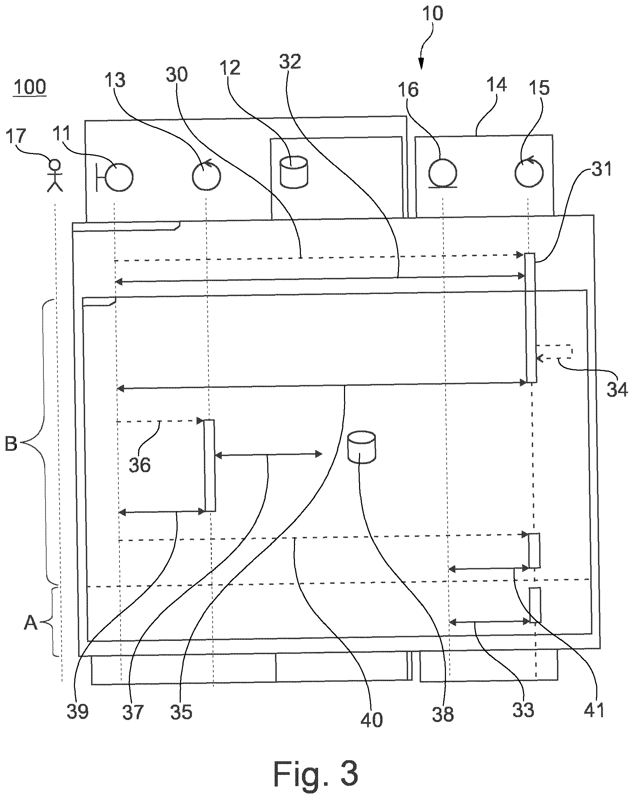

As shown in Fig. 3 after creation of the user defined database policy and the user defined resource type as described with reference to Figs. 1 and 2, the container orchestration system 11 detects the creation of the user defined resource type, and notifies 30 the database management controller 14, in particular the control module 15 of the database management controller 14, about the detection of the user defined resource type. The database management controller 14, in particular the control module 15, identifies 31 the user defined resource type and retrieves 32 a database policy for the user defined resource type from the container orchestration system 11. The control module 15 of the database management controller 14 determines, whether a database instance compliant with the user defined database policy for the user defined resource type exists within the container orchestration environment 10. If such a database instance exists, the control module 15 proceeds with section A of the sequence diagram and updates 33 a database routing configuration for the resource type. If no database instance compliant with the user defined database policy for the user defined resource type exists, the control module 15 proceeds with section B of the sequence diagram and creates 34 a database configuration based on the user defined resource type and the user defined database policy. The control module 15 of the database management controller 14 sends 35 the database configuration to the container orchestration system 11, which may store the database configuration in the key-value-store 12. The container orchestration system 11 notifies 36 the database controller 13 that a new database configuration has been created. The database controller 13 then creates 37 a database instance 38 based on the database configuration for the user defined resource type and notifies 39 the container orchestration system 11 when the database instance 38 is ready for operation. The container orchestration system 11 notifies 40 the control module 15 of the database management controller 14, which updates 41 the database routing configuration managed by the middleware module 16 for the user defined resource type.

With the database routing configuration the middleware module 16 of the database management controller 14 is able to dynamically manage routes for the user defined resource type. The database management controller 14 ensures that different types of data are forwarded to the appropriate storage system thereby reducing the load on the key-value-store 12 and preventing it from becoming a bottle neck. The key-value-store 12 and the each database instance 38 is used for its intended purpose and can be scaled independently. Light weight configuration data such as database policies, database configurations and resource types are stored in the key-value-store 12. More complex data such as application data, resource type instances etc. are stored in the database instances 38 controlled by the database controller 13.

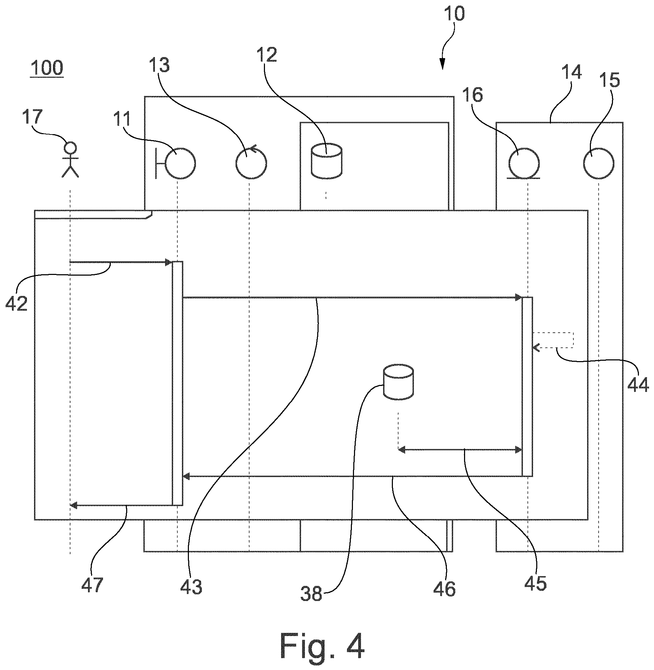

After the new user defined resource type has been created and the corresponding database configuration updated, the user 17 can create a new user defined resource type instance as shown in the sequence diagram of figure 4. In a first step the user 17 sends 42 a request to the container orchestration system 11 for the creation of a user defined resource type instance. The container orchestration system 11 then creates the user defined resource type instance and sends 43 the request to the middleware module 16 of the database management controller 14, which identifies 44 a database instance 38 for the user defined resource type instance by evaluating the database configuration for the user defined resource type, and stores 45 the user defined resource type instance in the identified database instance 38. When the user defined resource type instance has been stored in the database instance 38 the database management controller 14, in particular the middleware module 16, notifies 46 the container orchestration system 11 that the user defined resource type instance has been stored. The container orchestration system 11 then notifies 47 the user 17 that the resource type instance has been stored.

### List of reference numerals

- 100: Computer-implemented method

- 10: Container orchestration environment
- 11: Container orchestration system
- 12: Key-value-store
- 13: Database controller
- 14: Database management controller
- 15: Control module
- 16: Middleware module
- 17: User

- 18-37: Method steps
- 38: Database instance
- 39-47: Method steps

## Claims

1. A computer-implemented method (100) for the dynamic management of databases in a container orchestration environment (10), the container orchestration environment (10) comprising a container orchestration system (11) operated on a cluster with a leader node for handling a control plane and worker nodes for container deployment, the container orchestration environment (10) further comprising a key-value-store (12), a database controller (13) and a database management controller (14), the database management controller (14) comprising a control module (15) and a middleware module (16), the method comprising the steps:
- Identifying (31), by the control module (15) of the database management controller (14), a resource type, retrieving (32) a database policy, creating (34) a database configuration based on the resource type and the database policy, sending (35) the database configuration to the container orchestration system (11),
- Storing, by the container orchestration system (11), the database configuration in the key-value store (12),
- Creating (37), by the database controller (13), a database instance (38) based on the database configuration for the resource type if a database instance compliant with the database configuration for the resource type does not exist,
- Updating (33, 41), by the control module (15) of the database management controller (14), a database routing configuration for the resource type,
- Loading, by the middleware module (16) of the database management controller (14), the database routing configuration for the resource type.

2. The computer-implemented method (100) according to claim 1, wherein the resource type is a user defined resource type, wherein the user defined resource type is preferably created by the steps:
- Sending (24) a request, by a user (17), to the container orchestration system (11) for the creation of a user defined resource type,
- Creating, by the container orchestration system, the user defined resource type and sending (25) the user defined resource type to the middleware module (16) of the database management controller (14),
- Identifying (26), by the middleware module (16) of the database management controller (14), a data location for the user defined resource type and storing (27) the user defined resource type in the key-value-store (12).

3. The computer-implemented method (100) according to claim 2, further comprising the steps:
- Sending (42) a request, by the user (17), to the container orchestration system (11) for the creation of a user defined resource type instance,
- Sending (43) the request, by the container orchestration system (11), to the middleware module (16) of the database management controller (14),
- Identifying (44), by the middleware module (16) of the database management controller (14), a database instance (38) for the user defined resource type instance by evaluating the database configuration for the user defined resource type,
- Storing (45), by the middleware module (16) of the database management controller (14), the user defined resource type instance in the identified database instance (38).

4. The computer-implemented method (100) according to any one of the preceding claims, wherein the database policy is a user defined database policy, wherein the user defined database policy is preferably created by the steps:
- Sending (18) a request, by a user (17), to the container orchestration system (11) for the creation of a user defined database policy,
- Creating, by the container orchestration system (11), the user defined database policy and sending (19) the user defined database policy to the middleware module (16) of the database management controller (14),
- Identifying (20), by the middleware module (16) of the database management controller (14), a data location for the user defined database policy and storing (21) the user defined database policy in the key-value-store (12).

5. The computer-implemented method (100) according to claim 4, wherein the user defined database policy defines the data location for user defined resource type instances based on at least one of the user defined resource type, namespaces, applications, object labels, database type, database topology, scalability requirements or security compliance.

6. The computer-implemented method (100) according to any one of claims 2 to 5, wherein the user defined resource type is a data structure requiring database handling.

7. The computer-implemented method (100) according to any one of the preceding claims, further comprising at least one of the steps:
- Preferably dynamically, scaling, by a monitoring module of the database management controller (14), the database instance (38),
- Transferring, by a migration module of the database management controller (14), data between database instances (38), preferably based on user-defined rules,
- Upgrading, by an upgrade module of the database management controller (14), database instances (38), preferably based on user-defined rules.

8. The computer-implemented method (100) according to any one of the preceding claims, wherein the database management controller (14) comprises a global revision mapping module, the method further comprising the step
- Mapping, by the global revision mapping module, database instances (38) into a global revision system, and/or
- Increasing, by the global revision mapping module, a global unique revision counter for each write operation.

9. The computer-implemented method (100) according to any one of the preceding claims, wherein the container orchestration system (11) is a Kubernetes installation, preferably to deploy and manage Kubernetes like API servers, and/or wherein the key value store (12) is an ETCD installation, and/or wherein the database instance (38) is a relational database, in particular a MySQL database or a pgSQL database, or a non-relational database.

10. A computer program product comprising instructions which, when the program is executed by a cluster comprising a leader node and worker nodes, cause the cluster to carry out the steps of the method (100) of any one of the preceding claims.

11. A computer-readable storage medium comprising instructions which, when executed by a cluster comprising a leader node and worker nodes, cause the cluster to carry out the method (100) of any one of claims 1 to 9.

12. A data processing system comprising means for carrying out the steps of the method (100) of any one of claims 1 to 9.

13. The data processing system according to claim 12, comprising a cluster with a leader node for handling a control plane and worker nodes for container deployment.

## Amended claims

### Amended claims in accordance with Rule 137(2) EPC.

1. A computer-implemented method (100) for the dynamic management of databases in a container orchestration environment (10), the container orchestration environment (10) comprising a container orchestration system (11) operated on a cluster with a leader node for handling a control plane and worker nodes for container deployment, the container orchestration environment (10) further comprising a key-value-store (12), a database controller (13) and a database management controller (14), the database management controller (14) comprising a control module (15) and a middleware module (16), the method comprising the steps:
- Identifying (31), by the control module (15) of the database management controller (14), a resource type, wherein a resource type is a data structure definition for a data structure relevant to user applications or infrastructure, or a database policy, retrieving (32) a database policy, creating (34) a database configuration based on the resource type and the database policy, sending (35) the database configuration to the container orchestration system (11),
- Storing, by the container orchestration system (11), the database configuration in the key-value store (12),
- Creating (37), by the database controller (13), a database instance (38) based on the database configuration for the resource type if a database instance compliant with the database configuration for the resource type does not exist,
- Updating (33, 41), by the control module (15) of the database management controller (14), a database routing configuration for the resource type, wherein the database management controller (14) is configured to route resource type instances to the appropriate database instance (38) based on the database routing configuration,
- Loading, by the middleware module (16) of the database management controller (14), the database routing configuration for the resource type.

2. The computer-implemented method (100) according to claim 1, wherein the resource type is a user defined resource type, wherein the user defined resource type is preferably created by the steps:
- Sending (24) a request, by a user (17), to the container orchestration system (11) for the creation of a user defined resource type,
- Creating, by the container orchestration system, the user defined resource type and sending (25) the user defined resource type to the middleware module (16) of the database management controller (14),
- Identifying (26), by the middleware module (16) of the database management controller (14), a data location for the user defined resource type and storing (27) the user defined resource type in the key-value-store (12).

3. The computer-implemented method (100) according to claim 2, further comprising the steps:
- Sending (42) a request, by the user (17), to the container orchestration system (11) for the creation of a user defined resource type instance,
- Sending (43) the request, by the container orchestration system (11), to the middleware module (16) of the database management controller (14),
- Identifying (44), by the middleware module (16) of the database management controller (14), a database instance (38) for the user defined resource type instance by evaluating the database configuration for the user defined resource type,
- Storing (45), by the middleware module (16) of the database management controller (14), the user defined resource type instance in the identified database instance (38).

4. The computer-implemented method (100) according to any one of the preceding claims, wherein the database policy is a user defined database policy, wherein the user defined database policy is preferably created by the steps:
- Sending (18) a request, by a user (17), to the container orchestration system (11) for the creation of a user defined database policy,
- Creating, by the container orchestration system (11), the user defined database policy and sending (19) the user defined database policy to the middleware module (16) of the database management controller (14),
- Identifying (20), by the middleware module (16) of the database management controller (14), a data location for the user defined database policy and storing (21) the user defined database policy in the key-value-store (12).

5. The computer-implemented method (100) according to claim 4, wherein the user defined database policy defines the data location for user defined resource type instances based on at least one of the user defined resource type, namespaces, applications, object labels, database type, database topology, scalability requirements or security compliance.

6. The computer-implemented method (100) according to any one of claims 2 to 5, wherein the user defined resource type is a data structure requiring database handling.

7. The computer-implemented method (100) according to any one of the preceding claims, further comprising at least one of the steps:
- Preferably dynamically, scaling, by a monitoring module of the database management controller (14), the database instance (38),
- Transferring, by a migration module of the database management controller (14), data between database instances (38), preferably based on user-defined rules,
- Upgrading, by an upgrade module of the database management controller (14), database instances (38), preferably based on user-defined rules.

8. The computer-implemented method (100) according to any one of the preceding claims, wherein the database management controller (14) comprises a global revision mapping module, the method further comprising the step
- Mapping, by the global revision mapping module, database instances (38) into a global revision system, and/or
- Increasing, by the global revision mapping module, a global unique revision counter for each write operation.

9. The computer-implemented method (100) according to any one of the preceding claims, wherein the container orchestration system (11) is a Kubernetes installation, preferably to deploy and manage Kubernetes like API servers, and/or wherein the key value store (12) is an ETCD installation, and/or wherein the database instance (38) is a relational database, in particular a MySQL database or a pgSQL database , or a non-relational database.

10. A computer program product comprising instructions which, when the program is executed by a cluster comprising a leader node and worker nodes, cause the cluster to carry out the steps of the method (100) of any one of the preceding claims.

11. A computer-readable storage medium comprising instructions which, when executed by a cluster comprising a leader node and worker nodes, cause the cluster to carry out the method (100) of any one of claims 1 to 9.

12. A data processing system comprising means for carrying out the steps of the method (100) of any one of claims 1 to 9.

13. The data processing system according to claim 12, comprising a cluster with a leader node for handling a control plane and worker nodes for container deployment.
